(19) Europäisches Patentamt
European Patent Office
Office européen des brevets

(11) EP 1 843 564 B1

(12) EUROPEAN PATENT SPECIFICATION

(45) Date of publication and mention of the grant of the patent:
**07.09.2011 Bulletin 2011/36**

(51) Int Cl.:
***H04M 3/30*** *(2006.01)*

(21) Application number: **06290616.9**

(22) Date of filing: **07.04.2006**

(54) **Communication line diagnostics tool and method detecting synchronized/ correlated anomalies**

Diagnosegerät für Kommunikationsleitungen und Detektionsverfahren für synchronisierte/korrelierte Anomalien

Outil de diagnostique pour une ligne de communication et procédé pour détection des anomalies synchronisées/corrélées

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**10.10.2007 Bulletin 2007/41**

(73) Proprietor: **Alcatel Lucent**
**75008 Paris (FR)**

(72) Inventors:
- **Fossion, Marc Jean Joseph**
  **5140 Ligny (BE)**
- **Eekman, Jeröme Alexandre**
  **7170 Manage (BE)**
- **Sartenaer, Thierry Marie Liliane André**
  **5140 Tongrinne (BE)**

(74) Representative: **ALU Antw Patent Attorneys**
**Copernicuslaan 50**
**2018 Antwerpen (BE)**

(56) References cited:
**WO-A-01/35607 US-A- 5 465 321**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of the Invention

The present invention generally relates to diagnosing problems on communication loops or lines, like for instance copper pair loops that are configured as Digital Subscriber Lines (DSL) to enable triple play service deployment, i.e. concurrent deployment of High Speed Internet (HSI) access, conversational point-to-point services such as VoIP or conversational IP multimedia services, and client-server based services such as broadcast TV (BTV). Whereas High Speed Internet access was a best-effort type of service, voice and video services of the conversational or client-server type require end-to-end quality of service. Operators need stable, high-quality broadband connections that can deliver these new services effectively and reliably. The DSL physical link and the home network are typically the weakest points in the triple play deployment chain. Intermittent contacts, radio-frequency interference (RFI), crosstalk and other events are typical sources of impairments in the DSL spectrum. In-house cabling issues are for instance caused by missing filters/splitters, bad quality in-house wiring, etc. As a consequence, network operators need to diagnose, analyze and resolve problems on those lines quickly in order to detect issues early, avoid unnecessary truck rollouts, and improve service quality.

### Background of the Invention

Alcatel's Network Analyzer, 5530 NA Release 3.1, is a software tool for diagnosing problems that are present on copper pair communication lines. A product brochure describing Alcatel's 5530 NA Release 3.1 can be downloaded from the Internet via the following URL:

http:llwww.alcatel.com/com/en/appcontent/opgss/18917_5530_NA_R31_pb _tcm228-188451635.pdf

The line quality assessment and diagnosis in Alcatel's 5530 NA Release 3.1 are based on Single-Ended Line Testing (SELT) or Dual Ended Line Testing (DELT), two techniques that enable measurement of the line condition without dispatching maintenance technicians to attach test equipment to one or both ends of the line. In SELT, only the central office (CO) modem collects physical layer parameter values. SELT is more adequate for line prequalification because no modem needs to be connected at the customer premises, and in circumstances where the line is out of order due to a metallic fault. In DELT, both the customer premises equipment (CPE) modem and the central office (CO) modem measure or collect values of certain physical layer parameters in one-shot or repeatedly over time, e.g. the noise margin on the DSL loop, the attenuation (in dB), the bitloading or number of bits transmitted on the different carriers of the discrete multi tone (DMT) scheme, the transmit power, the bit error rate (BER), etc. The collected parameter values are then analysed for abnormal symptoms. The Alcatel 5530 NA Release 3.1 thereto contains anomaly sensors, i.e. software modules which compare the parameter values to respective thresholds. The threshold-based anomaly sensors have a binary (good, fault) or tri-state (good, fault, unknown) output to qualify the line. The working of such a threshold-based anomaly sensor is illustrated by Fig. 1 of this patent application which shows the monitoring of an individual parameter 102 in function of time 101 and the comparison against a threshold value 103. The output results of the threshold-based anomaly sensors are further processed by a decision engine that identifies the origin of the problem on the copper pair and provides repair advise for the customer.

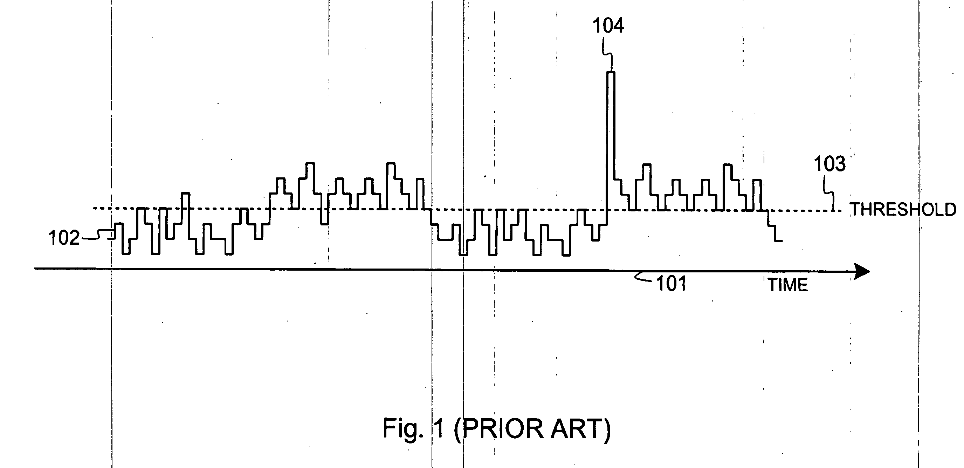

In particular around transient phases of the modem, for instance during training and when leaving synchronization, the collection of parameter values might be affected by errors, i.e. so called bad samples. Also, erroneous parameter values may be reported by the CPE modem to the network analyzer again resulting in bad samples. Such erroneous parameter values, like for instance sample 104 in Fig. 1, disturb the threshold-based anomaly sensors and consequently the conclusions and repair advise provided by the decision logic of the known 5530 network analyzer. Threshold-based anomaly sensors, like the ones known from the 5530 NA, are very sensitive to erroneous parameter samples. One inconsistent value out of a few thousands of collected parameter values is quite common and sufficient to disturb the diagnosis. Further, noise like for instance measurement noise may affect the data collection and threshold-based anomaly sensors. Except for the isolated bad sample 104, Fig. 1 shows alterations between two fundamental states, the parameter value collection in each state being affected by measurement noise. Applying the threshold based sensor with threshold level at 103 will obviously result in a bad diagnostic because the two fundamental states cannot be separated on the basis of the hard threshold. Data smoothening through low pass filters could be applied to prevent that isolated erroneous parameter samples and/or noise disturb the threshold-based anomaly sensors, but data smoothening also may hide real transient parameter values as a result of which information may get lost, hence reducing the accuracy of the diagnosis.

Further, the diagnostic provided by the 5530 NA Release 3.1 is rather instable as it suffers from a so called "butterfly effect". As a result of this "butterfly effect", the reported diagnostic result (and evidently also the repair advise) might change drastically depending on the parameter value collection period. Whilst the cause of the problem on the line remains unchanged, the presence of a few corrupted parameter value samples may affect the output of the decision logic. Whereas little changes in the input parameter values should only result in little or no changes of the diagnostic, the sharp threshold effect of the anomaly sensors in the 5530 NA Release 3.1 renders the prior art diagnostic rather instable.

It is also noticed that the threshold level 103 is the best choice for the example parameter values of Fig. 1. This choice of a threshold level is rather tricky and it has to be adapted in function of the case, which is an additional complexity of the prior art.

The International Patent Application WO 01/35607 A1 entitled "Design and Architecture of an Impairment Diagnosis System for Use in Communications Systems" describes a method for impairment diagnosis of digital subscriber lines (DSL) wherein the network management system (NMS or 161 in Fig. 1 and Fig. 7 of WO 01/35607) collects plural line parameter values, called the Line Data 723. As explained in paragraph [0077] of WO 01/35607, these line parameter values may contain upstream and downstream SNR values, upstream and downstream attenuation values, upstream and downstream power values, upstream and downstream bin values, upstream and downstream bit loading values, etc. Thereupon, the NMS known from WO 01/35607 applies probabilistic or statistic modelling to analyze, diagnose and compensate for line impairments. Examples of such statistic models are Bayesian estimation techniques (see [0048]), Gaussian approximation (see [0063]), averaging, etc. Although the method disclosed in WO 01/35607 teaches to monitor plural line parameters and to remove noise from the measurements through statistic modelling, the method is rather complex and time consuming because the statistic models are rather complex and require monitoring of the line parameters over time. As a consequence, the method is excellent for analyzing and diagnosing static line impairments but is not adequate in quickly detecting transients or changes on the lines.

Summarizing, the reliability of the known line diagnostics tools is limited because its final result, i.e. the suspected problem and the repair advise, might be inaccurate due to erroneous parameter value samples that disturb the threshold-based anomaly sensors, and instable due to its sensitiveness to the data collection period. Straightforward improvements like data smoothing or averaging (or other, more complex statistic models) applied on the collected parameter values is tricky, is slow and therefore not efficient to analyze and diagnose transients, may result in loss of information and may require manual tuning to take into account operator-specific or modem-specific aspects.

## Summary of the Invention

It is an object of the current invention to disclose a communication line diagnostics tool and method that overcomes the above described shortcomings of the prior art solution, and in particular improves the accuracy, reliability and stability thereof.

According to the invention, this object is realised by a communication line diagnostics tool as defined by claim 1, i.e. comprising:

a. means for collecting parameter values for a plurality of communication line parameters; and

b. anomaly detection means for detecting anomalies in the parameter values, the anomaly detection means being adapted to detect synchronized anomalies in parameter values of multiple communication line parameters.

Indeed, if the communication line's conditions change because of a physical layer problem, changes are induced synchronously in several monitored parameters. Whereas each individual parameter contains poor information that cannot be extracted through simple threshold-based mechanisms, using the synchronism of changes in multiple parameters makes it easier to reliably and accurately detect a real line conditions problem. The basic idea of the current invention is thus to distinguish synchronized abnormal changes in parameter values collected by a communication line diagnostics tool in order to enhance reliability and accuracy of the loop analysis and eventual repair advise given.

The communication line parameters whose synchronized behaviour is monitored can be of different types. They can be scalar parameters, i.e. parameters whose value is a single numeric value, like for instance the mean attenuation of the line in decibels (dB), the signal-to-noise ratio in decibels (dB), the attainable bit rate in bits per second (bps), etc. Alternatively, they can be vector parameters whose value consists of a collection of numeric values, like for instance the bit loading, i.e. the number of bits transported by the different carriers in a multi-carrier modulation scheme like DMT used on DSL lines, etc. According to the current invention, reliable diagnostics should be computed on the basis of two or more of these collected parameters with an increased level of confidence compared over the prior art 5530 NA Release 3.1 product.

The current invention also relates to a communication line diagnostics method executed by a tool as defined in claim 1. Such method is defined in claim 9.

An additional, optional feature of the communication line diagnostics tool according to the present invention is that the anomaly detection may be adapted to also detect correlated anomalies in the parameter values, as defined by claim 2.

Correlated anomalies are for instance behaviour repeated over time, typical sequences of behaviour indicative for certain problems, etc. Thus, the communication line diagnostics tool according to the present invention may not only detect synchronized changes in the collected parameter values, but also detect sequential behaviour and/or behaviour repeated over time.

If for example two modes are alternating with a long period of the first mode and short repeated periods of the second mode, then it is likely that a DSL splitter is missing in the home network. If a stable first mode is alternating with several, uncorrelated behaviour modes, there is a serious suspicion for intermittent bad contacts. Observing the behaviour sequence and/or repetitiveness thus adds to the accuracy and stability with which the communication line is diagnosed and eventually repaired.

A further, optional, characteristic feature of the communication line diagnostics tool according to the present invention is that the anomaly detection means comprises a segmentation algorithm able to cluster consecutive instantaneous states of the communication line into fundamental states according to a distance metric to thereby enable auto-adaptation to noise. This feature is defined by claim 3.

Indeed, segmentation or clustering of the line behaviour over different time intervals can be used to reach reliable loop diagnostics based on synchronized and/or correlated parameter value change detection. Thereto, instantaneous states of the communication line have to be clustered or segmented into fundamental states of the communication line. An instantaneous state represents the concatenation of all communication line parameters, that are found or assumed to remain constant during a specific time interval. In case the parameters are sampled at a constant rate, an instantaneous state can for instance be a single sample of all parameters. A new instantaneous state is achieved when at least one of the collected parameter values is modified. A fundamental state of the communication line can be identified as a group of successive instantaneous states with homogeneous properties. The fundamental states are a priori unknown and must be extracted from the collected data themselves through an identification algorithm that associates one or more successive time segments with a specific behaviour of the communication line. During this/these time segments, the main parameters that are monitored remain stable, i.e. their values stay within a specific range. The identification algorithm consequently describes the system as a number of successive transitions between a few fundamental states that are each characterized by certain statistical properties.

The identification algorithm can use a distance metric that quantifies the distance between instantaneous states in order to cluster them into fundamental states. The distance between instantaneous states can be defined as a combination of the respective distances between the collected parameter values, e.g. the absolute difference between the values or a function thereof for scalar parameters and a combination of the pairwise differences between component values for vector parameters or a more complex function of the vector components. The distance between two instantaneous states for instance can be a simple Euclidian distance, or it can be a weighted sum of the distances between the parameters whereby the weights can compensate for the different scales, in particular the different units like decibels, bps, watts, etc., and the weights can reflect the priorities attached to the different parameters in computing the distance between instantaneous states. In addition to weights, the distance metric used to calculate the distance between pairs of instantaneous states can include additional terms to compensate for correlations between certain parameters. One example thereof is the concept of the Mahalanobis distance metric, described for instance in the publication "Mahalanobis Distance" that can be retrieved from the Internet at URL:

www.wu-wien.ac.at/usr/h99c/h9951826/distance.pdf

Successive instantaneous states whose distance stays within certain limits will be clustered according to the segmentation algorithm into a few fundamental states of the communication line.

Yet another optional feature of the communication line diagnostics tool according to the present invention is that the anomaly detection may use a compatibility estimation algorithm able to determine correlations between fundamental states through a statistic law that compares those fundamental states on the basis of one or more statistical characteristics. This feature is defined by claim 4.

Thus, repetitive behaviour or more generally correlations between time-spaced fundamental states of the communication line, can be identified by comparing the data sets collected for those states on the basis of certain statistical properties like their means, standard deviations, number of data in the segment relating to those fundamental states, etc.

As indicated by claim 5, one example of a statistical law that can be used in embodiments of the present invention to estimate the compatibility between fundamental states in order to detect correlations there between is the Fisher-Student law.

A further feature of the communication line diagnostics tool according to the current invention is that its anomaly detection means may comprise a recurrence/correlation algorithm able to calculate an event probability on the basis of the likelihood of a sequence of fundamental states, as indicated by claim 6.

Such recurrence analysis allows to reject bad samples and to produce a continuous anomaly sensor output.

Another optional feature of the current invention is that the parameter values may be collected for multiple communication lines an may be correlated for improved anomaly detection, as defined by claim 7.

This way, anomaly detection is improved in cases where multiple lines are disturbed through the same external event.

Still an optional feature of the communication line diagnostics tool according to the present invention is that it may comprise decision logic able to identify a problem on the communication line, and able to provide repair advise for that problem, as defined by claim 8.

## Brief Description of the Drawings

Fig. 1 illustrates the working of a prior art communication line diagnostics tool with threshold-based anomaly sensor;
Fig. 2 illustrates an embodiment of the line diagnostics method according to the present invention;
Fig. 3 illustrates the parameter value collection in an embodiment of the line diagnostics method and tool according to the present invention;
Fig. 4 illustrates the application of a distance metric in order to cluster instantaneous states of the communication line in the embodiment of Fig. 3;
Fig. 5 illustrates the segmentation of instantaneous states into fundamental states through a hierarchical mechanism in an embodiment of the current invention;
Fig. 6 illustrates the segment compatibility estimation in an embodiment of the current invention; and
Fig. 7 illustrates the recurrence/correlation analysis in an embodiment of the current invention.

## Detailed Description of Embodiment(s)

In the prior art solution illustrated by Fig. 1 an individual parameter is analyzed in time (horizontal axis 101) through threshold detection. The samples or parameter values 102 are compared with a threshold value 103. The result is a binary output: the line is good (e.g. when the parameter value is below the threshold 103) or not good (e.g. when the parameter value is above the threshold 103). The threshold based sensor is sensitive to bad or erroneous samples like sample 104 in Fig. 1. Such inconsistent samples, on DSL loops typically appearing near transient phases or as a result of erroneous reporting by the CPE modem, affect the accuracy, reliability and stability of the diagnostic, as explained above. It is further noticed that the threshold level 103 is the best choice for the example parameter values of Fig. 1. This choice of a threshold level is rather tricky and it has to be adapted in function of the case, which is an additional complexity of the prior art.

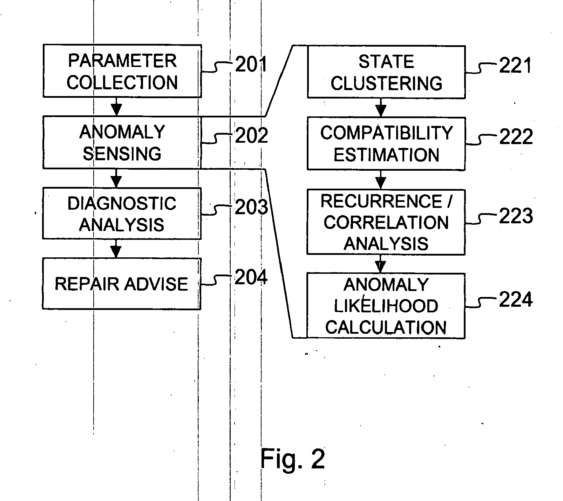

Fig. 2 generally illustrates the working of a line diagnostic tool according to the present invention. In a first step, 201, multiple parameter values are collected during a period of time: param 1 (ti), param 2 (ti), ..., param N (ti), where ti denotes the collection instant, i.e. the instant in time where the parameters are sampled. The parameters can be scalar, i.e. having a single numeric value, or they can be vector parameters, i.e. represented by plural numeric values. Examples of scalar parameters that can be monitored for a twisted copper pair that is analyzed for DSL deployment, are the attainable bit rate and the mean attenuation. Examples of vector parameters that can be monitored for DSL loops are the bit loading and signal-to-noise ratio for each carrier of the DMT spectrum. The collection of parameter values, i.e. step 201 in Fig. 2, can be done by the Central Office (CO), e.g. the Digital Subscriber Line Access Multiplexer (DSLAM) or Digital Loop Carrier (DLC) in case of DSL loops, can be done by the remote terminal, e.g. the Customer Premises Equipment (CPE) in case of DSL loops, or it can be done by an additional unit or piece of equipment that collects the parameter values deeper in the network for several or all DSL loops of an operator. Also a combination of collecting certain parameter values in the CO, and other parameter values in the CPE or in an additional unit like the network analyzer is feasible. In case the parameter values are collected remotely, they are reported automatically - at regular instants or whenever they change - or on request to the loop diagnostics tool that will analyze them. Further steps of the method illustrated by Fig. 2 will be described below in conjunction with other figures.

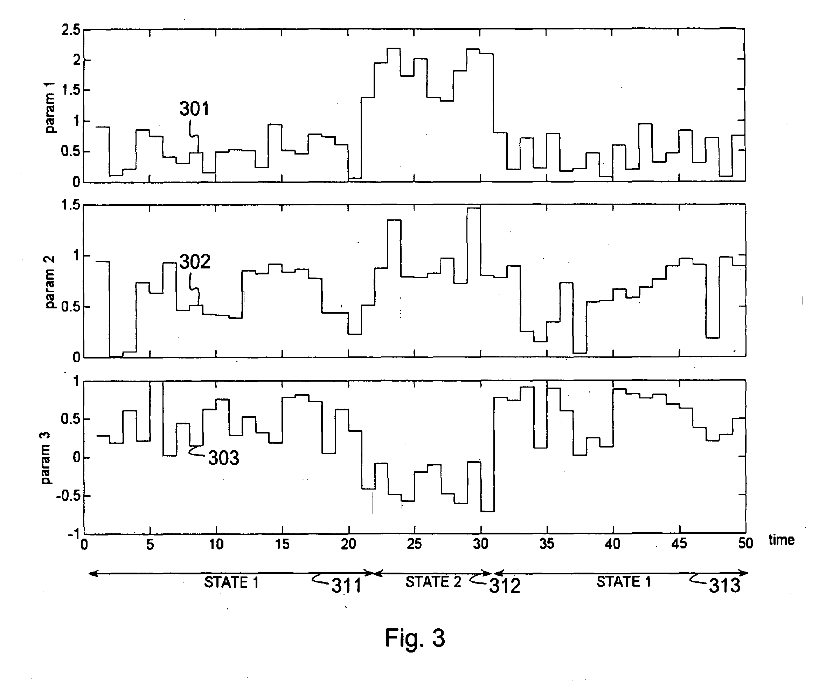

Fig. 3 gives an example of 3 scalar test parameters, whose respective values 301, 302 and 303 are sampled at a constant rate and collected in a loop diagnostics tool operating in accordance with the present invention. In the example of Fig. 3, 50 samples are collected for the 3 monitored parameters. The collected parameter values can be described as successive transitions between instantaneous states X1, X2, ..., X50, whereby each new instantaneous state Xi is defined as the concatenation of the collected parameter values that are found or assumed to remain constant during the time interval [t(i),t(i+1)]. Thus, a new instantaneous state is entered when at least one of the collected parameter values is modified. The system illustrated by Fig. 3 goes through 50 different instantaneous states, X1 to X50.

In a second step of the loop diagnostics method according to the current invention, anomaly sensors detect anomalies in the collected parameter values in order to detect problems on the line under analysis. This second step is referenced by 202 in Fig. 2, and starts with the clustering or segmentation of instantaneous states into a few fundamental states of the communication line, as indicated by sub-step 221 in Fig. 2.

By associating groups of successive instantaneous states Xi with homogeneous properties, a small number of fundamental states Si can be identified for the communication line. In Fig. 3 for instance, the 50 instantaneous states X1 ... X50 are clustered into 3 fundamental states, respectively referenced by 311, 312 and 313. The identification of these fundamental states is done through a segmentation or clustering algorithm that is based on the distance or global distance D (Xi,Xj) between pairs of instantaneous states Xi and Xj, and eventually on the duration Ti of the instantaneous states Xi. The fundamental states Si are a priori unknown and have to be extracted from the data, i.e. the collected parameter values themselves, in sub-step 221. The purpose of the segment identification or state clustering algorithm is to associate one or more time segments with a specific behaviour of the communication line: examples are a stable range of the main parameters, an unstable state wherein all parameter values vary heavily, etc. As a result of the clustering or segmentation algorithm, the communication line is described as a relatively small number of transitions between a few fundamental states that are each characterized by certain statistical properties.

As mentioned above, the segmentation algorithm makes use of a distance metric that quantifies the distance between pairs of instantaneous states Xi and Xj. The generalized distance between two values of the same monitored parameter at different time intervals t1 and t2 can be the absolute difference between the parameter values or a function of that difference for scalar parameters. For vector parameters, the distance between two values at different time instants must take into account all components of the respective vector parameters. It can be a simple combination of all pairwise differences between the components of the vectors, or it can be a more complex function of the vector components. The global distance between two instantaneous states Xi and Xj can be defined as a combination of the respective generalized distances between the parameters that form part of the instantaneous states. Such global distance can be computed as a classical Euclidean distance, or alternatively a more complex combination of the respective parameter-distances can be used. In a weighted sum of the parameter distances for instance, the weights can compensate for the different scales or different units of the various parameters, and/or the weights can reflect the priorities allocated to the different parameters in calculating the resulting distance metric. Further, the global distance definition can take into account correlations between pairs of parameters, and compensate for such correlations through additional terms like cross-factors. One example metric that can be used for that purpose is the Mahalanobis distance.

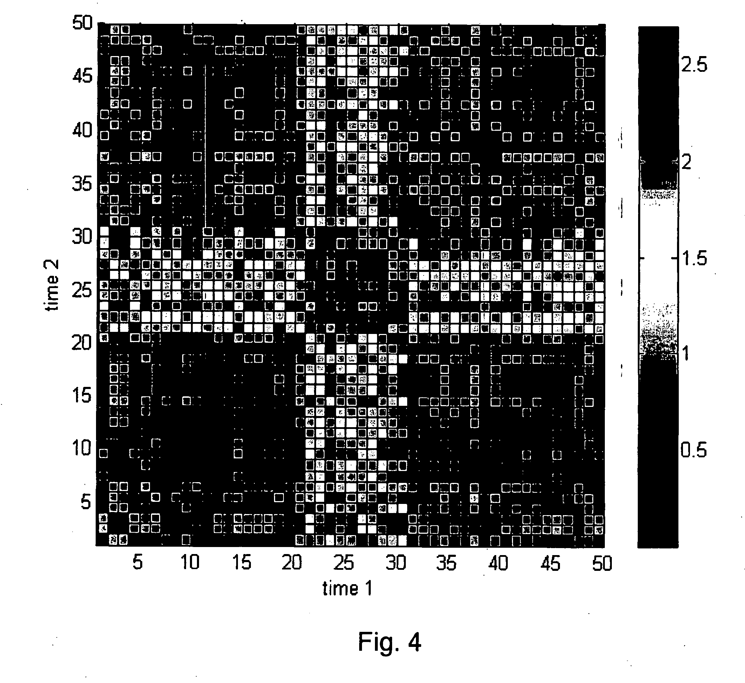

Fig. 4 shows the distance matrix Dij between all pairs of instantaneous states Xi and Xj given by Fig. 3. In Fig. 4, the Euclidean distance has been used as global distance metric between the instantaneous states, the same weight was allocated all parameters, and no correlations were considered. Thus, the global distance Dij was calculated as follows in order to constitute Fig. 4:

$$\text{Dij} = [\text{param 1 (ti)} - \text{param 1 (tj)}]^2 + [\text{param 2 (ti)} - \text{param 2 (tj)}]^2 + [\text{param 3 (ti)} - \text{param 3 (tj)}]^2$$

The analysis of the distane matrix Dij of Fig. 4 clearly provides three successive coherent segments: instantaneous states X1-X20, instantaneous states X21-X30, and instantaneous states X31-X50. This corresponds to the fundamental states 311, 312 and 313 in Fig. 3. Furthermore, the first and third segments appear to correspond to the same fundamental state of the system. Any appropriate segmentation algorithm based on the global distance matrix of Fig. 4, is able to identify these fundamental states without the need for any predefined threshold, thereby realizing auto-adaptation to noise.

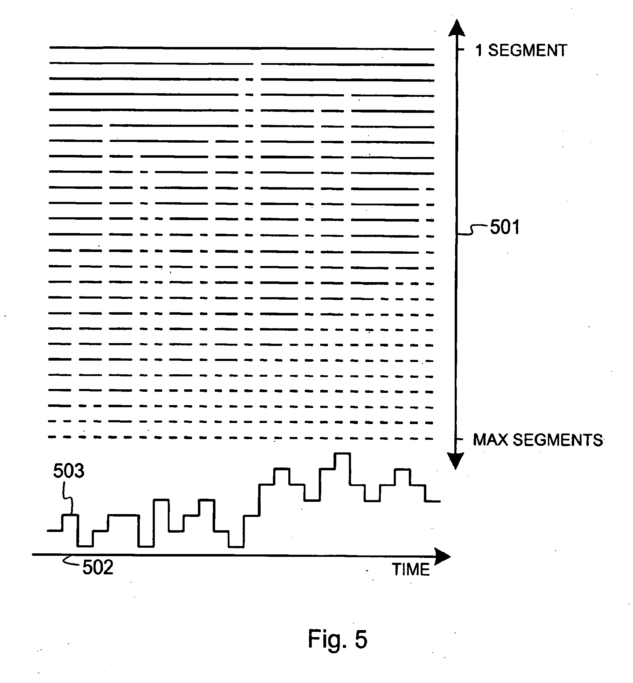

The implementation of segmentation or state clustering in sub-step 221 requires the definition of a cost function, based on the global distance Dij and the duration Ti of instantaneous states. Through a cost function, groups of similar, successive instantaneous states are progressively merged together into emerging fundamental states. A hierarchical solution can be used, which generally provides a good compromise between performance and complexity. Fig. 5 represents an example of such a hierarchical mechanism for segmentation of instantaneous states into fundamental states based on a simplified example with only one parameter 503 being monitored in function of time 502. At the lowest level, all instantaneous states Xi, i.e. all different values of the parameter, are considered as separate segments. Moving upwards, similar values are progressively merged into larger segments, up to the highest level where all instantaneous states are merged into a single segment. At each step of the hierarchical mechanism, the choice of the next segment pair to be merged is made in order to minimize the cost function. After the segmentation of the data into a few consecutive segments, the same type of hierarchical clustering process can be used to cluster the obtained segments into a few fundamental states. It is noticed that although the hierarchical segmentation algorithm described above moves upwards in the scheme of Fig. 5, progressively merging similar values, the skilled person will appreciate that an equivalent alternative could move downwards in the scheme of Fig. 5, progressively cutting or removing values at the most appropriate place.

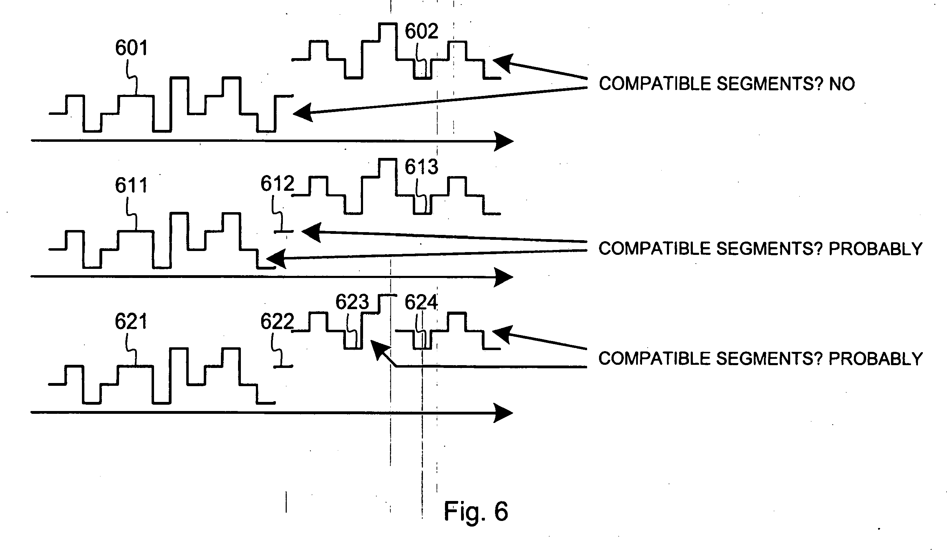

Following the segmentation or state clustering process, the most likely number of segments must be determined in a next sub-step identified by 222 in Fig. 2. Compatibility estimation between segments based on statistical laws like the Fisher-Student test can be used for that purpose. Ranging for instance from the highest level of Fig. 5 (1 SEGMENT) to the lowest level (MAX SEGMENTS), the compatibility is estimated between pairs of segments to be separated. Fig. 6 illustrates such a compatibility evaluation for the single parameter that was assumed to be sampled in Fig. 5: the first separation results in obviously uncompatible segments 601 and 602; the second separation results in possibly compatible segments 611 and 612 whereas segment 613 corresponds to segment 602 that was already isolated in the first step; the third separation results in possibly compatible segments 623 and 624 whereas the segments 621 and 622 correspond to the segments 611 and 612 that were already isolated in the previous steps; etc. In this example, the best choice is therefore to stop the segmentation after the first step, i.e. to account for two significant segments at all: segments 601 and 602.

Although illustrated by Fig. 5 and Fig. 6 on a single parameter, it will be obvious to the skilled person how the hierarchical compatibility estimation algorithm can be applied to states concatenating plural parameters in order to determine the preferred amount of fundamental states or segments.

Compatibility/un-compatibility estimation between states is done by using statistical laws like the Fisher-Student law on both segments for each separation. For example, the Fisher-Student law evaluates the compatibility between 2 data sets by taking into account their means, standard-deviations, and the number of data in each segment. This law is valid for continuous data and does not take into account any measurement inaccuracy, but it can be adapted for use with discrete values and to allow some inaccuracy with the measurements.

The next sub-step in Fig. 2 is the recurrence/correlation analysis of the system states in 223. In this sub-step, the anomaly sensors look for synchronized and/or correlated abnormal changes in the parameter values to identify events and/or problems on the communication line. An event is defined as a succession of states/segments with some absolute or relative characteristics. The state NO_SHOWTIME can be added as an intrinsic additional state/segment. An event family is a set or series of similar events. Similarity criteria are defined as a function of the suspicious behaviour searched for.

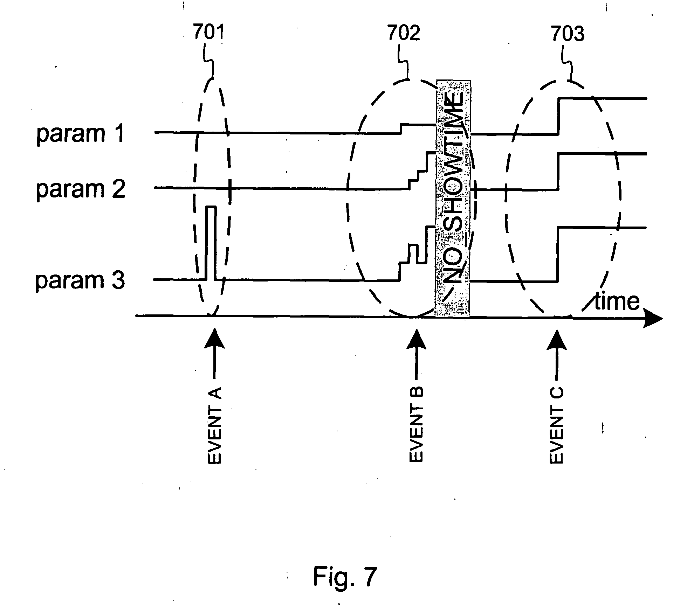

Looking for bad parameter samples and suspicious behavior, an event will for instance be a first segment followed by a second short segment containing corrupted data, followed by a third segment compatible with the first one. The short segment shall have mainly 1 parameter changed, incompatible with the values collected for that same parameter in other segments. Other parameters remain compatible with the values collected for the corresponding parameters in other segments. An example thereof is EVENT A, referenced by 701 in Fig. 7. Another example of an event is daily, similar loss of showtime, for instance due to a missing DSL splitter on an alarm installation connected to the copper pair that is also used for the DSL deployment. The event will be a loss of showtime. Loss of showtime preceded by a suspicious state change is indicative for a missing splitter on a telephone with NM drop. The event will be a first segment, followed by one or more short segments with some specific characteristics, followed by the NO_SHOWTIME state as illustrated by EVENT B or 702 in Fig. 7. Yet another example is a repetitive mode of showtime changes indicating suspicious behavior for instance due to a missing splitter on a telephone. This event will reflect in the repetition of events like EVENT C in Fig. 7: repetitive state or mode transitions, each state transition being represented by a first segment followed by a second segment with an optional short transient in between. Obviously, these examples which are typical for DSL lines or home networks are not exhaustive.

At last, in sub-step 224 of Fig. 2, the anomaly likelihood is calculated. An initial likelihood is calculated for each segment based only on the parameter values collected for that segment. For instance, the likelihood is very low if data in the state are out of range (bad parameter sample).

With each event within a family of events - family being defined by similarities from a suspicious behavior - an absolute local probability is associated depending on obviously general xDSL knowledge, assumed line conditions (e.g. good short line or long line), data collection parameters (e.g. the sampling period, ...), characteristics from states related to the event, and surrounding states (e.g. durations, amplitude change, showtime duration before, showtime duration after , ...), surrounding events (e.g. the time between this event and the preceding one, ...), the likelihood allocated to each state of the event, etc. For some event families, one can also define a relative local probability, relative to one event taken as a reference. The relative local probability can be a function of similarity measurement between current and reference events (e.g. durations, amplitude change, ...), time stamp difference between events, etc. Taking also into account periods without showtime or without data, when parameters are not available, and thus potential events are not visible, the anomaly likelihood calculation algorithm can combine all local probabilities associated to one event family. For relative local probabilities, all the resulting likelihoods (one for each reference event) have to be merged into one, taking into account the number of reference events. Iterative combinations will be used to increase the output reliability. As a result the anomaly likelihood calculation algorithm calculates in step 224 a likelihood that suspicious behavior is really present and/or a likelihood that suspicious behavior is really absent. The combined calculation can be used as output of the anomaly sensor to be fed in the diagnosis engine that makes a diagnostic analysis in step 203 and that eventually provides repair advise to the operator in step 204 of Fig. 2.

Examples of anomaly sensor outputs are a 30% likelihood that the bad parameters sample is normal, a 1e-18 likelihood that the loss of showtime preceded by a noise margin drop happens on a clean line. Hence the observed behavior is abnormal.

Summarizing, in the loop diagnostics method described above, false detection of loop problems due to bad parameter samples is excluded because such parameter samples are discarded. Further, the accuracy and reliability is significantly improved in comparison with the threshold based anomaly sensors from the prior art thanks to the segmentation and clustering on the one hand, and the correlation and probability calculation on the other hand. The diagnostics have become stable from one collection period to another as little changes in the parameter values result in little changes in the calculated probabilities. There is no sharp threshold effect. The definition and the use of the distance metric further allows to use non simple numeric parameters, e.g. the bitloading shape correlator. The segmentation automatically adapts to the noise level in case the parameter value collection is affected by noise. As a result there will be no false detection resulting from noisy measurements as was the case in the threshold-based prior art anomaly sensors.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

**1.** A communication line diagnostics tool for diagnosing problems on a communication line, said communication line diagnostics tool comprising:

a. means for collecting parameter values (201) for a plurality of communication line parameters,
**CHARACTERIZED BY**
b. anomaly detection means for detecting anomalies (202) in said parameter values, said anomaly detection means comprising a distance metric based segmentation algorithm able to cluster consecutive instantaneous states (221) of said communication line, each instantaneous state representing a concatenation of said parameter values assumed constant during a certain time interval, into fundamental states of said communication line according to a distance metric able to quantify the distance between pairs of said instantaneous states,
said anomaly detection means further comprising a statistic law based compatibility estimation algorithm able to determine correlations between said fundamental states (222) of said communication line through a statistic law able to compare sets of parameter values respectively corresponding to said fundamental states on the basis of one or more statistical characteristics,
said anomaly detection means further comprise a recurrence/correlation algorithm able to calculate an event probability on the basis of the likelihood of a sequence of said fundamental states
so that said anomaly detection means are adapted to detect anomalies induced synchronously in parameter values (221, 222, 223) of multiple communication line parameters.

**2.** A communication line diagnostics tool according to claim 1,
CHARACTERIZED IN THAT said anomaly detection means are further adapted to detect correlated anomalies in parameter values (223) of multiple communication line parameters.

**3.** A communication line diagnostics tool according to claim 1,
**CHARACTERIZED IN THAT** said statistic law is the Fisher-Student law.

**4.** A communication line diagnostics tool according to claim 1,
**CHARACTERIZED IN THAT** said means for collecting parameter values (201) are adapted for collecting parameter values for a plurality of communication lines, and said anomaly detection means further comprise a correlation algorithm able to correlate said parameter values collected for said multiple communication lines.

5. A communication line diagnostics tool according to claim 1,
**CHARACTERIZED IN THAT** said communication line diagnostics tool further comprises a decision unit able to identify a problem on said communication line (203) causing said anomalies in said parameter values, and able to provide repair advise (204) for said problem.

6. A communication line diagnostics method for diagnosing problems on a communication line, said communication line diagnostics methods comprising:

a. collecting parameter values (201) for a plurality of communication line parameters; and
b. detecting anomalies (202) in said parameter values,
said detecting anomalies in said parameter values including

- clustering consecutive instantaneous states (221) of said communication line with a distance metric based segmentation algorithm, each instantaneous state representing a concatenation of said parameter values assumed constant during a certain time interval, into fundamental states of said communication line according to a distance metric able to quantify the distance between pairs of said instantaneous states,
- determining correlations between said fundamental states (222) of said communication line with a statistic law based compatibility estimation algorithm, through a statistic law able to compare sets of parameter values respectively corresponding to said fundamental states on the basis of one or more statistical characteristics,
- calculating an event probability with a recurrence/correlation algorithm on the basis of the likelihood of a sequence of said fundamental states,

so that said anomalies can be detected induced synchronously in said parameter values of multiple communication line parameters.

## Patentansprüche

1. Diagnosegerät für Kommunikationsleitungen für die Diagnose von Problemen auf einer Verbindungsleitung, wobei das besagte Diagnosegerät für Kommunikationsleitungen umfasst:

a. Mittel zum Erfassen von Parameterwerten (201) für eine Mehrzahl von Kommunikationsleitungsparametern,
**GEKENNZEICHNET DURCH**
b. Anomalienerkennungsmittel zum Erkennen von Anomalien (202) in den besagten Parameterwerten, wobei die besagten Anomalienerkennungsmittel einen auf einer Abstandsmetrik basierenden Segmentierungsalgorithmus beinhalten, welcher geeignet ist, aufeinanderfolgende augenblickliche Zustände (221) der besagten Kommunikationsleitung, wobei jeder augenblickliche Zustand eine Verkettung der besagten, während eines bestimmten Zeitintervalls als konstant angenommenen Parameterwerte darstellt, gemäß einer Abstandsmetrik, welche geeignet ist, den Abstand zwischen Paaren der besagten augenblicklichen Zustände zu quantifizieren, in Grundzustände der besagten Verbindungsleitung zusammenzuballen,

wobei die besagten Anomalienerkennungsmittel weiterhin einen auf dem statistischen Gesetz basierenden Kompatibilitätsschätzungsalgorithmus beinhalten, welcher geeignet ist, Korrelationen zwischen den besagten Grundzuständen (222) der besagten Kommunikationsleitung anhand eines statistischen Gesetzes, welches geeignet ist, Sätze von Parameterwerten, welche jeweils den besagten Grundzuständen entsprechen, auf der Basis von einer oder mehreren statistischen Eigenschaften zu vergleichen, zu ermitteln, wobei die besagten Anomalienerkennungsmittel weiterhin einen Rekursions-/Korrelationsalgorithmus beinhalten, welcher geeignet ist, eine Ereigniswahrscheinlichkeit auf der Basis der Ähnlichkeit einer Sequenz der besagten Grundzustände zu berechnen,
so dass die besagten Anomalienerkennungsmittel dazu ausgelegt sind, synchron in Parameterwerten (221, 222, 223) mehrfacher Kommunikationsleitungsparameter induzierte Anomalien zu erkennen.

2. Diagnosegerät für Kommunikationsleitungen nach Anspruch 1,
**DADURCH GEKENNZEICHNET, dass** die besagten Anomalienerkennungsmittel weiterhin dazu ausgelegt sind, korrelierte Anomalien in Parameterwerten (223) mehrfacher Kommunikationsleitungsparameter zu erkennen.

**3.** Diagnosegerät für Kommunikationsleitungen nach Anspruch 1, **DADURCH GEKENNZEICHNET, dass** das besagte statistische Gesetz das Fisher-Student-Gesetz ist.

**4.** Diagnosegerät für Kommunikationsleitungen nach Anspruch 1, **DADURCH GEKENNZEICHNET, dass** die besagten Mittel zum Erfassen von Parameterwerten (201) dazu ausgelegt sind, Parameterwerte für eine Mehrzahl von Kommunikationsleitungen zu erfassen, und dass die besagten Anomalienerkennungsmittel weiterhin einen Korrelationsalgorithmus beinhalten, welcher geeignet ist, die besagten für die besagte Mehrzahl von Kommunikationsleitungen erfassten Parameterwerte zu korrelieren.

**5.** Diagnosegerät für Kommunikationsleitungen nach Anspruch 1,
**DADURCH GEKENNZEICHNET, dass** das besagte Diagnosegerät für Kommunikationsleitungen weiterhin eine Entscheidungseinheit umfasst, welche dazu ausgelegt ist, ein Problem auf der besagten Kommunikationsleitung (203), welches die besagten Anomalien in den besagten Patermeterwerten verursacht, zu identifizieren, und dazu ausgelegt ist, Reparaturhinweise (204) für das besagte Problem zu bieten.

**6.** Diagnoseverfahren für Kommunikationsleitungen für die Diagnose von Problemen auf einer Verbindungsleitung, wobei das besagte Diagnoseverfahren für Kommunikationsleitungen umfasst:

a. Erfassen von Parameterwerten (201) für eine Mehrzahl von Kommunikationsleitungsparametern; und
b. Erkennen von Anomalien (202) in den besagten Parameterwerten, einschließlich

- Zusammenballen von aufeinanderfolgenden augenblicklichen Zuständen (221) der besagten Kommunikationsleitung mit einem auf einer Abstandsmetrik basierenden Segmentierungsalgorithmus, wobei jeder augenblickliche Zustand eine Verkettung der besagten, während eines bestimmten Zeitintervalls als konstant angenommenen Parameterwerte darstellt, gemäß einer Abstandsmetrik, welche geeignet ist, den Abstand zwischen Paaren der besagten augenblicklichen Zustände zu quantifizieren, in Grundzustände der besagten Verbindungsleitung,
- Ermitteln von Korrelationen zwischen den besagten Grundzuständen (222) der besagten Kommunikationsleitung mit einem auf dem statistischen Gesetz basierenden Kompatibilitätsschätzungsalgorithmus, anhand eines statischen Gesetzes, welches geeignet ist, Sätze von Parameterwerten, welche jeweils den besagten Grundzuständen entsprechen, auf der Basis von einer oder mehreren statistischen Eigenschaften zu vergleichen,
- Berechnen einer Ereigniswahrscheinlichkeit mit einem Rekursions-/Korrelationsalgorithmus auf der Basis der Ähnlichkeit einer Sequenz der besagten Grundzustände,

so dass die besagten Anomalien als synchron in den besagten Parameterwerten mehrfacher Kommunikationsleitungsparameter induziert erkannt werden können.

## Revendications

**1.** Outil de diagnostic pour une ligne de communication pour diagnostiquer des problèmes sur une ligne de communication, ledit outil de diagnostic pour une ligne de communication comprenant :

a. moyens pour collecter des valeurs de paramètres (201) pour une pluralité de paramètres de lignes de communication,
**CARACTÉRISÉ PAR**
b. moyens de détection d'anomalies pour détecter des anomalies (202) dans lesdites valeurs de paramètre, lesdits moyens de détection d'anomalies comprenant un algorithme de segmentation basé sur un indice de distance capable de regrouper des états instantanés consécutifs (221) de ladite ligne de communication, chaque état instantané représentant une concaténation desdites valeurs de paramètres supposées constantes durant un certain intervalle de temps, en états fondamentaux de ladite ligne de communication conformément à un indice de distance capable de quantifier la distance entre des paires desdits états instantanés,

lesdits moyens de détection d'anomalies comprenant en outre un algorithme d'estimation de compatibilité basé sur une loi statistique capable de déterminer des corrélations entre lesdits états fondamentaux (222) de ladite ligne de communication par le biais d'une loi statistique capable de comparer des ensembles de valeurs de paramètres correspondant respectivement auxdits états fondamentaux sur la base d'une ou de plusieurs caractéristiques statistiques,
lesdits moyens de détection d'anomalies comprennent en outre un algorithme de récurrence/corrélation capable de calculer une probabilité d'événement sur la base de la vraisemblance d'une séquence desdits états fondamentaux de sorte que lesdits moyens de détection d'anomalies soient adaptés pour détecter des anomalies induites de manière synchrone dans des valeurs de paramètres (221, 222, 223) de paramètres de lignes de communication multiples.

**2.** Outil de diagnostic pour une ligne de communication selon la revendication 1,
**CARACTÉRISÉ EN CE QUE** lesdits moyens de détection d'anomalies sont en outre adaptés pour détecter des anomalies corrélées dans des valeurs de paramètres (223) de paramètres de lignes de communication multiples.

**3.** Outil de diagnostic pour une ligne de communication selon la revendication 1, **CARACTÉRISÉ EN CE QUE** ladite loi statistique est la loi de Fisher-Student.

**4.** Outil de diagnostic pour une ligne de communication selon la revendication 1, **CARACTÉRISÉ EN CE QUE** lesdits moyens pour collecter des valeurs de paramètres (201) sont adaptés pour collecter des valeurs de paramètres pour une pluralité de lignes de communication, et lesdits moyens de détection d'anomalies comprennent en outre un algorithme de corrélation capable de corréler lesdites valeurs de paramètres collectées pour lesdites lignes de communication multiples.

**5.** Outil de diagnostic pour une ligne de communication selon la revendication 1, **CARACTÉRISÉ EN CE QUE** ledit outil de diagnostic pour une ligne de communication comprend en outre une unité de décision capable d'identifier un problème sur ladite ligne de communication (203) entraînant lesdites anomalies dans lesdites valeurs de paramètres, et capable de fournir un conseil de réparation (204) pour ledit problème.

**6.** Procédé de diagnostic pour une ligne de communication pour diagnostiquer des problèmes sur une ligne de communication, lesdits procédés de diagnostic pour une ligne de communication comprenant les étapes suivantes :

a. collecter des valeurs de paramètres (201) pour une pluralité de paramètres de lignes de communication ; et
b. détecter des anomalies (202) dans lesdites valeurs de paramètres,
ladite détection d'anomalies dans lesdites valeurs de paramètres comprenant les étapes suivantes

- regrouper des états instantanés consécutifs (221) de ladite ligne de communication avec un algorithme de segmentation basé sur un indice de distance, chaque état instantané représentant une concaténation desdites valeurs de paramètres supposées constantes durant un certain intervalle de temps, en états fondamentaux de ladite ligne de communication conformément à un indice de distance capable de quantifier la distance entre des paires desdits états instantanés,
- déterminer des corrélations entre lesdits états fondamentaux (222) de ladite ligne de communication avec un algorithme d'estimation de compatibilité basé sur une loi statistique, par le biais d'une loi statistique capable de comparer des ensembles de valeurs de paramètres correspondant respectivement auxdits états fondamentaux sur la base d'une ou de plusieurs caractéristiques statistiques,
- calculer une probabilité d'évènement avec un algorithme de récurrence/corrélation sur la base de la vraisemblance d'une séquence desdits états fondamentaux,

de sorte que lesdites anomalies puissent être détectées comme étant induites de manière synchrone dans lesdites valeurs de paramètres de paramètres de lignes de communication multiples.

THRESHOLD
103
TIME
104
101
102

Fig. 1 (PRIOR ART)

PARAMETER COLLECTION
201
ANOMALY SENSING
202
DIAGNOSTIC ANALYSIS
203
REPAIR ADVISE
204
STATE CLUSTERING
221
COMPATIBILITY ESTIMATION
222
RECURRENCE / CORRELATION ANALYSIS
223
ANOMALY LIKELIHOOD CALCULATION
224

Fig. 2

param 1
param 2
param 3
time
301
302
303
311
312
313
STATE 1
STATE 2
STATE 1

Fig. 3

time 1
time 2
2.5
2
1.5
1
0.5

Fig. 4

1 SEGMENT
501
MAX SEGMENTS
503
502
TIME

Fig. 5

COMPATIBLE SEGMENTS? NO
COMPATIBLE SEGMENTS? PROBABLY
COMPATIBLE SEGMENTS? PROBABLY
601
602
611
612
613
621
622
623
624

Fig. 6

701
702
703
time
NO SHOWTIME
EVENT A
EVENT B
EVENT C
param 1
param 2
param 3

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0135607 A1
- WO 0135607 A